# EUROPEAN PATENT APPLICATION

(11) **EP 1 557 302 A2**
(43) Date of publication of application: **27.07.2005**
(21) Application number: 05100031.3
(22) Date of filing: 04.01.2005
(51) Int. Cl.: B60G 9/02

(54) **Suspension system for vehicles**

(30) Priority: 21.01.2004 ES 200400114
(71) Applicant: Automoviles Utilitarios, S.A., 08240 Manresa (ES)
(72) Inventor: Rabassa Vilardell, Enric, 08240 Manresa (ES)
(74) Representative: Ponti Sales, Adelaida

(57) **Abstract**

The vehicle to which the suspension system is applied comprises an engine (6), a frame (1) and a rear rigid bridge (2), characterised in that the suspension system comprises first (3) and second (4) suspension means articulated from an end to the frame (1) and from the other end to the rear rigid bridge (2), being the distance between the two ends of the first suspension means (3) different from the distance between the two ends of the second suspension means (4).

It permits that rear rigid bridge to be adapted completely to the ground, independently of its irregularities, maintaining the rest of the vehicle completely flat.

## Description

The present invention refers to a suspension system for vehicles, particularly for vehicles for transporting goods of reduced size.

### BACKGROUND OF THE INVENTION

As it is well-known, the present vehicles for transporting of goods comprise a suspension between the rear rigid bridge and the frame of the vehicle.

Nowadays, these suspension systems comprise usually a leaf spring system, which permit that the rear bridge to swing upwards and downwards to be adapted to the irregularities of the ground.

However, these suspension systems already known cannot be adapted completely to these irregularities, because the rear rigid bridge usually does not swing to the right and to the left side.

There are suspension systems that permit this oscillation, but its use is limited to vehicles with great dimensions, because of the impossibility to align the rotation input of the bridge with the rotation output of the engine in a reduced distance.

### DESCRIPTION OF THE INVENTION

With the suspension system of the invention the drawbacks cited can the solved, presenting other advantages that will be described.

The suspension system for vehicles of the present invention is characterised in that the suspension system comprises first and second suspension means articulated from an end to the frame and from the other end to the rear rigid bridge, being the distance between the two ends of the first suspension means different from the distance between the two ends of the second suspension means.

Preferably, the distance between the two ends of the first suspension means is shorter than the distance between the two ends of the second suspension means.

Advantageously, said first suspension means comprise a parallelogram articulated from an end to the upper part of said rear rigid bridge.

According to a preferred embodiment, said parallelogram is a triangle, one of its vertexes being articulated to the upper part of said rear rigid bridge, and said triangle is articulated to the rear rigid bridge by a ball joint.

According to a preferred embodiment, said second suspension means comprises a pair of struts parallel one to each other articulated from one of its ends to the lower part of said rear rigid bridge.

With the suspension system of the present invention, are obtained the next advantages:

The rear rigid bridge adapts completely to the ground, independently of its irregularity, being the rest of the vehicle completely flat.

The rear rigid bridge swings upwards and downwards, and also swing to the left and to the right.

The suspension system of the present invention can be used in vehicles of reduced length, because the rotation input of the bridge and the rotation outlet of the engine are substantially aligned permanently, within a margin.

### BRIEF DESCRIPTION OF THE DRAWINGS

For a better understanding of what has been described, some drawings are shown in which, diagrammatically and only as a non-limitative example, it is shown an embodiment.
Fig. 1 is an elevation view of the rear part of a vehicle which comprises the suspension system of the present invention, in a first position; and
Fig. 2 is an elevation view of the rear part of a vehicle, which comprises the suspension system of the present invention, in a second position.

### DESCRIPTION OF A PREFERRED EMBODIMENT

As can be seen in the drawings, the vehicle where the suspension system of the present invention is placed comprises a frame 1 and a rear rigid bridge 2, between which is placed the suspension system of the invention.

The suspension system comprises first suspension jeans formed by a parallelogram 3, preferably a triangle, articulated from one of its end to the frame 1 and from the other end to the rear bridge 2.

The triangle 3 is articulated to the rear bridge 2 through one of its vertexes by a ball joint 5, being located said ball joint 5 in the upper part of said rear bridge 2 and at a position substantially centred.

The other two vertexes of the triangle 3 are articulated to the frame 1 by bearings without maintenance.

The suspension system of the present invention also comprises second suspension means formed by a pair of struts 4 parallel with each other, each articulated to the frame 1 from one end y from the other to the lower part of the rear bridge 2 by bearing without maintenance.

As can be seen in the drawings, the length of the arms of the triangle 3 between the frame 1 and the rear bridge 2 is shorter than the length of the struts 4 also between the frame 1 and the rear bridge 2.

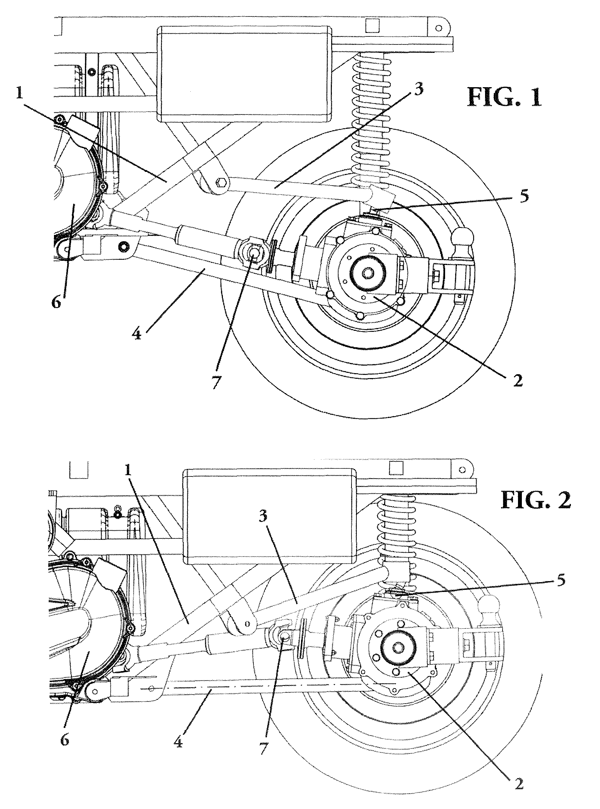

The vehicle also comprises a transmission between the rotation output of the engine 6 and the rotation input of the rear bridge 2. This transmission comprises a universal joint 7, which permits that the rotation output of the engine 6 and the rotation input of the rear bridge 2 to be substantially aligned permanently, within a margin, as can be seen in Fig. 2.

As stated previously, the suspension system of the present invention permits the rear rigid bridge to swing upwards and downwards, and also to swing about the longitudinal axis of the vehicle.

Even though reference has be made to an embodiment of the invention, it is evident for a person skilled in the art that the suspension system described is susceptible of numerous variations and modifications, and that all the details cited can be substituted by other technically equivalent details, without departing from the scope of protection defined by the attached claims.

## Claims

1. Suspension system for vehicles, the vehicle comprising an engine (6), a frame (1) and a rear rigid bridge (2), **characterised in that** the suspension system comprises first (3) and second (4) suspension means articulated from an end to the frame (1) and from the other end to the rear rigid bridge (2), being the distance between the two ends of the first suspension means (3) different from the distance between the two ends of the second suspension means (4).

2. Suspension system according to claim 1, **characterised in that** the distance between the two ends of the first suspension means (3) is shorter than the distance between the two ends of the second suspension means (4).

3. Suspension system according to claim 1 or 2, **characterised in that** said first suspension means comprise a parallelogram (3) articulated from an end to the upper part of said rear rigid bridge (2).

4. Suspension system according to claim 3, **characterised in that** said parallelogram is a triangle (3), one of its vertexes being articulated to the upper part of said rear rigid bridge (2).

5. Suspension system according to claim 5, **characterised in that** said triangle (3) is articulated to the rear rigid bridge (2) by a ball joint (5).

6. Suspension system according to claim 1 or 2, **characterised in that** said second suspension means comprises a pair of struts (4) parallel one to each other articulated from one of its ends to the lower part of said rear rigid bridge (2).
